# EUROPÄISCHE PATENTSCHRIFT

(11) **EP 0 712 741 B1**
(45) Veröffentlichungstag und Bekanntmachung des Hinweises auf die Patenterteilung: **11.08.1999**
(21) Anmeldenummer: 95117474.7
(22) Anmeldetag: 07.11.1995
(51) Int. Cl.: B60G 7/00, B29C 69/00

(54) **Pendelstütze oder dergleichen für die gelenkige Verbindung von Fahrwerksteilen in Kraftfahrzeugen**
Arm for the rotational linking of motor vehicle suspension elements
Bras pour la liaison en rotation d'éléments de la suspension de véhicules à moteur

(30) Priorität: 19.11.1994 DE 4441219
(43) Veröffentlichungstag der Anmeldung: 22.05.1996
(73) Patentinhaber: Lemförder Metallwaren AG, 49448 Lemförde (DE)
(72) Erfinder: Grube, Volker, D-49356 Diepholz (DE); Nordloh, Alfons, D-49429 Visbek (DE)

(56) Entgegenhaltungen:
- EP-A- 0 184 503
- EP-A- 0 296 568
- EP-A- 0 398 841
- DE-A- 4 132 779
- DE-U- 7 528 196
- GB-A- 2 066 177
- US-A- 5 282 396
- PATENT ABSTRACTS OF JAPAN vol. 10 no. 134 (M-479) ,17.Mai 1986 & JP-A-60 257938 (TOYOTA) 19.Dezember 1985,

## Beschreibung

Die Erfindung bezieht sich auf eine Pendelstütze oder dergleichen für die gelenkige Verbindung von Fahrwerksteilen in Kraftfahrzeugen.

Es ist bekannt, solche Pendelstützen für die beschriebene oder eine ähnliche Verwendung im Fahrwerk eines Kraftfahrzeuges aus Kunststoff im Spritzgießverfahren herzustellen. Mit diesen, Verfahren können jedoch nur offene Profile kostengünstig hergestellt werden. Daraus ergibt sich eine starke Verschmutzungsanfälligkeit im praktischen Einsatz der offenen Profile solcher Pendelstützen. Der durch das Spritzgießen aus Kunststoff erzielte Gewichtsvorteil gegenüber Pendelstützen aus Stahl wird im praktischen Betrieb durch die zunehmende Verschmutzung aufgebraucht. Trotz aufwendiger Verfahrenstechnik ist es bisher nicht gelungen, geschlossene Hohlprofile mit dem sogenannten Gasinnendruckverfahren herzustellen, die den hohen Anforderungen an die Pendelstütze im praktischen Betrieb erfüllen.

Aus GB 2 066 177 A ist eine metallische Radführungsstrebe bekannt, die aus zwei Schalenhälften zusammengesetzt ist. Jede der Schalenhälften weist an ihrem einen Ende eine Aufnahme auf, deren Durchmesser kleiner ist, als der Durchmesser der gegenüberliegend am anderen Ende derselben Schalenhälfte angeordneten Aufnahme. In die Aufnahme mit dem kleineren Durchmesser kann jeweils ein Lagerelement eingesetzt werden. In die Aufnahme mit dem größeren Durchmesser wird die Aufnahme der korrespondierenden anderen Schalenhälfte mit ihrem entsprechenden Außendurchmesser eingesetzt. Zur Verbindung wird ein Preßsitz verwendet.
Nachteilig ist bei dieser Lösung, daß die Schalenhälften nur über einen Preßverband miteinander verbunden sind und somit ein selbsttätiges Lösen nicht mit ausreichender Sicherheit auszuschließen ist. Darüber hinaus führt die Metallausführung zu einem hohen Eigengewicht und erfordert hohe Fertigungskosten, da bei der Herstellung einer derartigen Strebe mehrere Arbeitsgänge nacheinander notwendig sind.

Aus US 5,282,396 ist ferner eine Stabilisatorausführung entnehmbar, bei der zwei metallische Schalenhälften unter Bildung eines Hohlraumes zusammengefügt sind. Die metallischen Schalenhälften sind dabei durch ein Guß- oder ein Umformverfahren hergestellt. Ihre Verbindung erfolgt durch ein Punktschweißverfahren im Randbereich der Schalenhälften.

Darüber hinaus ist aus der EP 0 296 568 A1 ein Verfahren zur Verbindung metallischer Komponenten, beispielsweise zweier Halbschalen, die über eine endseitige zylindrische Aufnahmebuchse verfügen, bekannt, bei dem die Halbschalen und die Außenoberfläche der Aufnahmebuchse einen Bund aufweisen. Dabei erfolgt zunächst eine Positionierung der beiden Halbschalen relativ zueinander. Anschließend wird eine Verbindung durch eine Schweißung am Bund des Aufnahmebereiches geschaffen, sodaß nachfolgend der umlaufende Bund an den Halbschalen verschweißt werden kann.
Nachteilig bei einer derartigen Ausführung ist, daß hier metallische Werkstoffe mit einem hohen Gewicht verwendet werden und daß bei Anwendung dieses Verfahrens die Nutzung der vorteilhaften Ultraschallverschweißung eines Kunststoffes nicht möglich ist.

Die Aufgabe der Erfindung besteht darin, eine im Spritzgießverfahren herstellbare Pendelstütze aus Kunststoff mit einem hohlen, in sich geschlossenen Innenprofil zu schaffen, um dadurch die bekannten Vorteile eines geringen Gewichts beizubehalten und gleichzeitig Nachteile durch eine Verschmutzung zu vermeiden.

Diese Aufgabe löst die Erfindung durch eine Pendelstütze mit Ausbildungsmerkmalen nach dem Patentanspruch 1.

Der Zusammenbau des stabförmigen Profils zwischen den Lageraugen an den Enden der Pendelstütze aus offenen Schalenteilen ermöglicht die werkzeugfallende Herstellung dieser Teile im Spritzgießverfahren. Das stabförmige Profil wird mit einem inneren, in sich geschlossenen Hohlraum aus zwei oder mehr im Spritzgießverfahren für sich hergestellte Teile zusammengesetzt, wobei die Teile durch eine an sich bekannte Fügetechnik fest und dicht miteinander verbunden werden. Geeignet sind zum Beispiel Klebetechniken oder auch Ultraschall- bzw. Orbitalschweißtechniken. Zur Anwendung kann gegebenenfalls auch eine Schnappverbindung für die getrennt hergestellten Schalenteile erfolgen, wobei elastisch verformbare Schnappelemente an dem einen Teil vorzugsweise in entsprechende Ausnehmungen des anderen Teiles unter elastischer Verformung eindrückbar sind. Die Lageraugen an den Enden der Pendelstütze können beispielsweise an einem durchgehenden Schalenteil ausgebildet werden. Jedoch ist es auch denkbar, die Lageraugen je für sich an einem anderen durchgehenden Schalenteil auszubilden und einstückig mit diesem Schalenteil herzustellen, **was allerdings nicht unmittelbar Gegenstand der vorliegenden Erfindung ist**. Erhalten bleibt in jedem Fall der an sich bekannte Vorteil einer gewichtsgünstigen Pendelstütze aus Kunststoff. Erreicht wird eine hohe Stabilität und Steifigkeit des stabförmigen Profils mit einem in sich geschlossenen inneren Hohlraum, der nicht einer Verschmutzung ausgesetzt ist.

Durch die erfindungsgemäße Lösung werden Kastenprofile hoher Flächenträgheits- und Widerstandsmomente gebildet. Bei vorgegebener Belastung können kleinere Querschnitte gewählt werden, so daß der vorhandene Bauraum besser nutzbar ist. Die Kastenprofile ermöglichen auch eine belastungsoptimale Gestaltung der Querschnitte. Eine bessere Materialausnutzung mit kleineren Querschnitten ergibt auch eine bessere Materialausnutzung und somit auch eine Kosteneinsparung.

In der Zeichnung **ist in der Figur 3 ein** Ausführungsbeispiel einer Pendelstütze in der erfindungsgemäßen Ausbildung dargestellt, **während die Figuren 1, 2 sowie 4 bis 8 lediglich Beispiele darstellen, die keine erfindungsgemäßen Lösungen darstellen**. Es zeigen:
- Figuren 1 bis 3: Längsschnitte durch unterschiedliche Ausführungsformen,
- Figuren 4 und 5: Seitenansichten weiterer Ausbildungsformen und
- Figuren 6 bis 8: unterschiedliche Formen möglicher Hohlprofile in Kastenform.

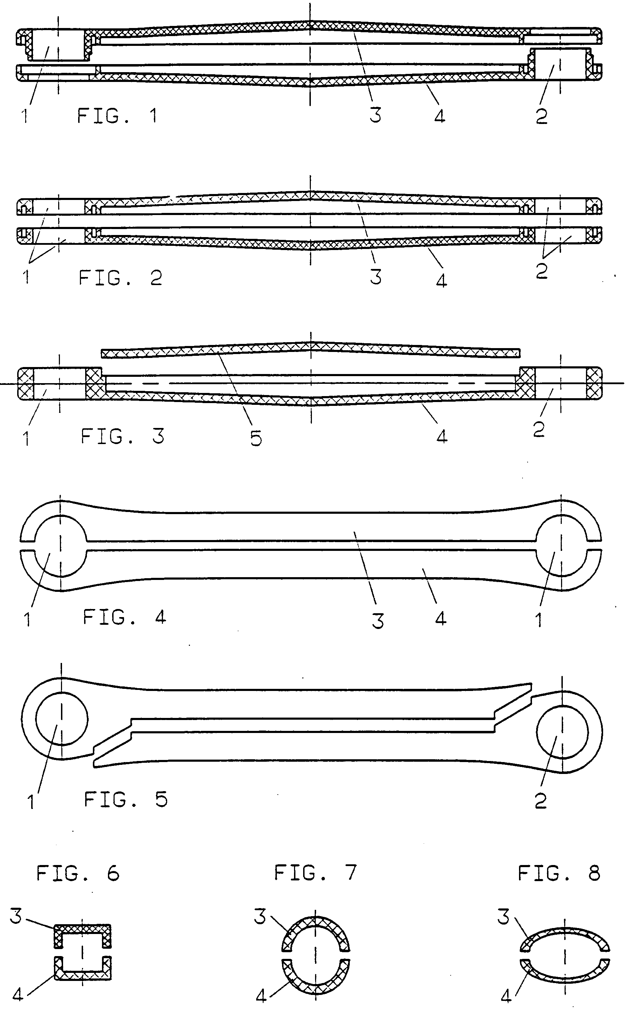

Bei dem Ausführungsbeispiel nach Figur 1 ist das stabförmige Profil zwischen den beiden an den Lagerenden ausgebildeten Lageraugen 1 und 2 aus zwei schalenförmigen Teilen 3 und 4 hergestellt, die erst nach ihrer Herstellung miteinander verbunden werden. Je eines der Lageraugen 1 bzw. 2 ist an einem der Schalenteile 3 bzw. 4 ausgebildet und einstückig mit diesem hergestellt. Zur Erhöhung der Stabilität ist das jeweils andere Schalenteil mit einer das Lagerauge nach dem Zusammenfügen umschließenden Ausnehmung versehen, wie es sich deutlich aus der Schnittdarstellung in der Figur 1 entnehmen läßt. Die beiden schalenförmigen Teile 3 und 4 sind somit spiegelbildlich ausgebildet und werden in spiegelbildlicher Lage mit der offenen Seite gegeneinandergerichtet aufeinandergelegt und durch eine geeignete Fügetechnik miteinander verbunden. Bei dem Ausführungsbeispiel nach der Figur 2 sind die Lageraugen 1 und 2 jeweils hälftig an den Enden durchgehender Schalenteile 3 und 4 ausgebildet, so daß zwei kongruente Teile für sich hergestellt und nach der Herstellung miteinander verbunden werden können. Benötigt wird somit nur eine Form für die Herstellung der Schalenteile 3 und 4 mit den angeformten Lageraugen 1 und 2 in hälftiger Bauweise.

Demgegenüber sind bei dem Ausführungsbeispiel nach der Figur 3 beide Lageraugen 1 und 2 an den Enden eines schalenförmigen Profilteiles 4 ausgebildet, dessen offene Profilseite nach der Herstellung durch ein flaches Deckelelement 5 verschlossen wird.

Bei den Ausbildungen nach den Figuren 1 bis 3 erfolgt die Teilung der zusammenzufügenden Teile in einer Ebene senkrecht zu den Achsen der Lageraugen 1 und 2. Demgegenüber erfolgt die Teilung bei den Ausführungsbeispielen nach den Figuren 4 und 5 in einer durch die Achse der Lageraugen 1 und 2 gelegten Ebene.

Die Figur 4 zeigt ein Ausführungsbeispiel aus zwei kongruenten, schalenförmigen Bauteilen 3 und 4 kurz vor der endgültigen Zusammenfügung. Die Lageraugen sind halbrund jeweils hälftig an beiden Enden des schalenförmigen Teiles 3 bzw. 4 ausgebildet. In Abweichung von der Gestaltung nach der Figur 4 ist die Teilung der schalenförmigen und miteinander zu verbindenden Teile 3 und 4 versetzt zu den Lageraugen 1 und 2 angeordnet. Zu den Ausführungsbeispielen nach den Figuren 4 und 5 gehören auch die Querschnittsdarstellungen in den Figuren 6, 7 und 8. Letztere zeigen stabförmige Hohlprofile der Pendelstütze in Schnittebenen, die parallel zu Achsebenen der Lageraugen 1 und 2 gelegt sind. Zur besseren Verdeutlichung der Erfindungsmerkmale sind die schalenförmigen Hälften des stabförmigen Profiles der Pendelstütze im Bereich zwischen den an den Enden ausgebildeten Lageraugen noch nicht fest zusammengefügt dargestellt. Für die Verbindung der beiden Teile 3 und 4 kommen bekannte Fügetechniken in Frage. Die Verbindung kann beispielsweise durch eine Klebetechnik, eine Schweißtechnik oder auch durch mechanische Mittel, zum Beispiel durch eine Schnappverbindung, erfolgen.

## Patentansprüche

1. Pendelstütze oder dergleichen aus Kunststoff für die gelenkige Verbindung von Fahrwerksteilen in Kraftfahrzeugen, bei der an den Enden ausgebildete Lageraugen (1, 2) durch ein stabförmiges Profil einstückig miteinander verbunden sind, das stabförmige Profil aus nach der Herstellung zu einem Hohlprofil dicht miteinander verbundenen Teilen zusammengesetzt ist, wobei beide Lageraugen (1 und 2) an den Enden eines schalenförmig offenen Profilteiles (4) ausgebildet sind, dessen offene Profilseite nach der Herstellung durch ein flaches Deckelelement (5) verschlossen wird.

2. Pendelstütze oder dergleichen für die gelenkige Verbindung von Fahrwerksteilen in Kraftfahrzeugen nach Anspruch 1,
dadurch gekennzeichnet, daß
die getrennt hergestellten Teile (3 oder 4, 5) durch eine an sich bekannte Fügetechnik, zum Beispiel Klebetechnik, Ultraschall- oder Orbitalschweißtechnik miteinander verbunden sind.

3. Pendelstütze oder dergleichen für die gelenkige Verbindung von Fahrwerksteilen in Kraftfahrzeugen nach Anspruch 1,
dadurch gekennzeichnet, daß
die Verbindung zwischen den getrennt hergestellten Teilen (3 oder 4, 5) aus elastisch verformbaren Schnappelementen an dem einen Teil besteht, die in entsprechende Ausnehmungen des anderen Teiles eindrückbar sind.

## Claims

1. Pendulum support or the like made of plastic material for the articulated connection of chassis parts in motor vehicles, wherein bearing eyes (1, 2) formed at the ends are integrally connected to one another by a rod-shaped profile, which is composed of parts which, after manufacture, are tightly connected to one another to form a hollow profile, both bearing eyes (1 and 2) being formed at the ends of a profile part (4), which is open in a dish-like manner and the open profile side of which after manufacture is closed by a flat cover element (5).

2. Pendulum support or the like for the articulated connection of chassis parts in motor vehicles according to claim 1,
characterized in that
the separately manufactured parts (3, or 4, 5) are connected to one another by a known jointing technique, e.g. an adhesive technique, ultrasonic welding technique or orbital welding technique.

3. Pendulum support or the like for the articulated connection of chassis parts in motor vehicles according to claim 1,
characterized in that
the connection between the separately manufactured parts (3 or 4, 5) comprises elastically deformable snap elements on the one part, which are pressable into corresponding recesses of the other part.

## Revendications

1. Bras oscillant ou analogue, en matière plastique, pour la liaison articulée de parties de châssis dans des véhicules automobiles, dans laquelle des yeux de palier (1, 2) réalisés aux extrémités sont réunis entre eux, d'une seule pièce, au moyen d'un élément profilé en forme de barre et l'élément profilé en forme de barre est composé de parties reliées de manière étanche l'une à l'autre après la fabrication de façon à former un élément profilé creux, les deux yeux de palier (1 et 2) étant réalisés aux extrémités d'une partie d'élément profilé (4) ouverte et en forme de coquille dont le côté d'élément profilé ouvert est fermé par un élément de recouvrement (5) plat après la fabrication.

2. Bras oscillant ou analogue pour la liaison articulée de parties de châssis dans des véhicules automobiles suivant la revendication 1, caractérisé en ce que les parties (3 ou 4, 5) fabriquées séparément sont réunies entre elles au moyen d'une technique de jonction connue en elle-même, par exemple technique de collage, technique de soudage aux ultrasons ou par mouvement orbital.

3. Bras oscillant ou analogue pour la liaison articulée de parties de châssis dans des véhicules automobiles suivant la revendication 1, caractérisé en ce que la jonction entre les parties (3 ou 4, 5) fabriquées séparément est constituée d'éléments d'enclenchement déformables élastiquement situés sur une première partie qui peuvent être enfoncés dans des logements correspondants de l'autre partie.
